# EUROPÄISCHE PATENTSCHRIFT

(11) **EP 2 641 210 B1**
(45) Veröffentlichungstag und Bekanntmachung des Hinweises auf die Patenterteilung: **01.01.2020**
(21) Anmeldenummer: 11815439.2
(22) Anmeldetag: 16.11.2011
(51) Int. Cl.: H04L 12/46, H04L 12/24

(54) **STEUERUNG VON BUSVERNETZTEN TEILNEHMERN**
CONTROL OF NETWORKED BUS PARTICIPANTS
CONTRÔLE DE PARTICIPANTS EN RÉSEAU BUS

(30) Priorität: 19.11.2010 EP 10014785
(43) Veröffentlichungstag der Anmeldung: 25.09.2013
(73) Patentinhaber: Eaton Intelligent Power Limited, Dublin 4 (IE)
(72) Erfinder: ARNDT, Karl-Heinz, 53859 Niederkassel (DE); THIESSMEIER, Peter, 53343 Wachtberg (DE)
(74) Vertreter: Eaton IP Group EMEA
(86) Internationale Anmeldenummer: PCT/EP2011/070237
(87) Internationale Veröffentlichungsnummer: WO 2012/066030

(56) Entgegenhaltungen:
- EP-A1- 1 151 897
- DE-A1-102006 019 451
- US-A- 6 148 355

## Beschreibung

Die Erfindung betrifft ein System zur Steuerung von busvernetzten Teilnehmern, wobei eine verarbeitende Einheit eine Schnittstelle zu einem Datenbus zur Steuerung und/oder Abfrage der Teilnehmer aufweist, sowie ein Konfigurationselement zur Verwendung in einem solchen System zur Steuerung von busvernetzten Teilnehmern, sowie ein Verfahren zur Steuerung von busvernetzten Teilnehmern durch eine verarbeitende Einheit mit einer Schnittstelle zu einem Datenbus, über welchen die Teilnehmer gesteuert und/oder abgefragt werden.

Beim Aufbau einer elektrischen Anlage lässt sich der Aufwand für die Verdrahtung und Verschaltung der elektrischen Teilnehmer mit dem Steuerungssystem wesentlich dadurch vereinfachen, dass die Teilnehmer über ein Bussystem datentechnisch vernetzt werden, mit dem Ziel, die angeschlossenen Teilnehmer zu steuern und zu überwachen. Ein solches System zur Steuerung von busvernetzten Geräten ist in der DE 10 2006 030 706 A1 beschrieben.

Elektrische Anlagen können in unterschiedlichen Ausbauzuständen betrieben werden, nämlich neben einem Vollausbau, bei dem sämtliche elektrische Teilnehmer mit dem Busnetz verbunden sind, gegebenenfalls eine Mehrzahl verschiedener Teilkonfigurationen, bei denen nur ein Teil der beim Vollausbau verwendeten Teilnehmer an den Bus angeschlossen ist. Dadurch kann jede Anlage, entsprechend den Anforderungen, so einfach und kostengünstig wie möglich aufgebaut werden.

Weiterhin sind Bussysteme mit austauschbaren, busvernetzten Teilnehmern bekannt, wobei eine verarbeitende Einheit vorhanden ist, die eine Schnittstelle zu einem Datenbus zur Steuerung und/oder Abfrage der Teilnehmer aufweist (US 6 148 355 A, EP 1 151 897 A1, DE 10 2006 019451 A1).

Ein Nachteil kann darin bestehen, dass eine Steuerung für die elektrische Anlage je nach Ausbauzustand auf die Art und Anzahl der elektrischen Teilnehmer an dem Bussystem eingerichtet werden muss. Das bedeutet, dass die jeweils individuelle Steuerung für jede mögliche Ausbaustufe der elektrischen Anlage bei jeder nachträglichen Änderung der Konfiguration, sei es durch Hinzufügen oder durch Weglassen von Teilnehmern, ausgetauscht oder gegebenenfalls angepasst werden muss.

Eine Aufgabe der Erfindung besteht darin, ein System zur Steuerung von busvernetzten Teilnehmern derart zu verbessern, dass damit verschiedene Ausbaustufen einer zu steuernden Anlage ohne Anpassung gesteuert werden können.

Die Aufgabe wird durch die Gegenstände der nebengeordneten Ansprüche gelöst. In den Unteransprüchen sind bevorzugte Ausführungsformen und vorteilhafte Weiterbildungen angegeben.

Das erfindungsgemäße System dient der Steuerung von busvernetzten Teilnehmern, wobei beliebige mit einem Bussystem vernetzbare Geräte als Teilnehmer bezeichnet werden, insbesondere Schalter, Taster, Sensoren, Aktoren oder auch intelligente Einheiten. Das erfindungsgemäße System weist dazu eine verarbeitende Einheit auf, wobei es sich in der Regel um eine im weitesten Sinne intelligente Einheit handelt, wie beispielsweise eine Schaltung, insbesondere eine speicherprogrammierbare Schaltung (SPS) oder einen Computer im allgemeinen. Die verarbeitende Einheit weist eine Schnittstelle zu einem Datenbus auf, welcher mit jedem Teilnehmer verbunden ist und zur Steuerung bzw. Abfrage der Teilnehmer dient. Das erfindungsgemäße System umfasst des Weiteren mindestens ein Konfigurationselement, wobei erfindungsgemäß vorgesehen ist, dass mindestens einer der Teilnehmer durch das Konfigurationselement ersetzbar ist. Das Konfigurationselement ist dazu vorgesehen, eine Kennung über den Datenbus zu senden und die verarbeitende Einheit ist dazu vorgesehen, das Konfigurationselement anhand der Kennung zu erkennen und das Konfigurationselement als Platzhalter des ersetzten Teilnehmers zu konfigurieren.

Die Erfindung bietet den Vorteil, dass einer oder mehrere der Teilnehmer jeweils durch ein Konfigurationselement ersetzt werden können, so dass nunmehr die Konfigurationselemente anstelle der Teilnehmer mit dem Datenbus vernetzt sind. Da die verarbeitende Einheit die Konfigurationselemente anhand der Kennung, die diese senden, erkennt, können die Konfigurationselemente vorteilhaft als Platzhalter konfiguriert werden. Die Konfigurationselemente oder Platzhalter simulieren also den ersetzten Teilnehmer für das System. Zur Erkennung der Konfigurationselemente greift die verarbeitende Einheit vorzugsweise auf eine Konfigurationsbeschreibung zu, in welcher beispielsweise Informationen zu den busvernetzten Teilnehmern und/oder die unverwechselbare Kennung der Konfigurationselemente hinterlegt sind. Das bedeutet, dass die Steuerung und deren Programm unverändert bleiben können, unabhängig davon, wieviele Platzhalter anstelle von Teilnehmern an dem Datenbus angeschlossen sind. Im Falle einer speicherprogrammierbaren Schaltung wäre also beispielsweise keine Änderung der Programmierung notwendig. Somit lässt sich eine elektrische Anlage mit busvernetzten Teilnehmern trotz unterschiedlicher Ausbaustufen vorteilhaft mit einer unveränderten Steuerung betreiben. Die aufwändige Bereitstellung von individuellen Steuerungen für jede Ausbaustufe entfällt. Ebenso wird eine Änderung der Anlage vereinfacht, da die Steuerung nicht ausgetauscht oder angepasst werden muss.

Gemäß dem erfindungsgemäßen System, ist die verarbeitende Einheit das Konfigurationselement derart konfiguriert, dass das Konfigurationselement Daten in derselben Länge sendet wie der ersetzte Teilnehmer. Die gesamte Länge der je Bustakt über den Datenbus gesendeten Daten bleibt somit unabhängig von der Anzahl der durch Konfigurationselemente ersetzten Teilnehmer gleich.

Gemäß dem erfindungsgemäßen System, ist das Konfigurationselement dazu vorgesehen, von der verarbeitenden Einheit gesendete Daten zu empfangen, diese jedoch nicht zu verarbeiten. Dadurch besteht vorteilhaft die Möglichkeit, dass die verarbeitende Einheit Daten in Form von Steuerbefehlen und/oder Abfragen an alle im Vollausbau vorgesehenen Teilnehmer sendet, unabhängig davon, welche dieser Teilnehmer tatsächlich mit dem Datenbus verbunden sind und welche durch Konfigurationselemente als Platzhalter ersetzt sind.

Gemäß einer bevorzugten Ausführungsform des Systems ist die verarbeitende Einheit dazu vorgesehen, von dem Konfigurationselement erhaltene Daten nicht zu verarbeiten. Die als Platzhalter eingesetzten Konfigurationselemente senden Daten an die verarbeitende Einheit, um die Gesamtmenge der über den Datenbus gesendeten Daten konstant zu halten, wobei die verarbeitende Einheit die von Konfigurationselementen gesendeten Daten an der unverwechselbaren Kennung der Konfigurationselemente erkennt und die Verarbeitung dieser irrelevanten Daten unterlässt.

Die verarbeitende Einheit muss nicht notwendigerweise ein ausschließlich zur Steuerung der busvernetzten Teilnehmer vorgesehenes Gerät mit einer unmittelbaren Schnittstelle zu dem Datenbus sein. Gemäß einer weiteren bevorzugten Ausführungsform des Systems ist vorgesehen, dass die verarbeitende Einheit eine Steuerung und ein Gateway aufweist, wobei das Gateway die Schnittstelle zu dem Datenbus aufweist. Das Gateway ist dabei über einen weiteren Bus mit der Steuerung verbunden. Die Steuerung kann im übrigen über diesen weiteren Bus noch mit weiteren Gateways oder direkt mit externen Teilnehmern außerhalb des erfindungsgemäßen Systems verbunden sein. Bei dieser Ausführungsform ist es besonders bevorzugt, dass das Gateway von dem Konfigurationselement erhaltene Daten anhand der Kennung erkennt und daraufhin die Steuerung anweist, diese Daten nicht zu verarbeiten. Da die Konfigurationselemente als Platzhalter ihre Kennung über den Datenbus senden, muss das Erkennen dieser Kennung bereits durch das Gateway erfolgen, da diese Kennung nur unter den Teilnehmern des Datenbusses eindeutig ein Konfigurationselement angibt. Dies gilt jedoch nicht notwendigerweise in dem weiteren, durch die Steuerung kontrollierten Bussystem.

Ein Konfigurationselement in dem erfindungsgemäßen System weist vorzugsweise eine anwendungsspezifische Schaltung und einen Anschluss an den Datenbus auf.

Die Schaltung ist bevorzugt dazu vorgesehen, dass durch das mit dem Datenbus verbundene Konfigurationselement eine Kennung über den Datenbus gesendet wird. Weiterhin bevorzugt ist die Schaltung dazu vorgesehen, durch die verarbeitende Einheit als Platzhalter für einen bestimmten Teilnehmer konfiguriert zu werden. Die Konfiguration der Schaltung ist insbesondere dahingehend durch die verarbeitende Einheit vorgebbar, dass das Konfigurationselement Daten in einer vorgegebenen Länge sendet. Insbesondere entspricht die vorgegebene Länge der Länge derjenigen Daten, welche durch den ersetzten Teilnehmer gesendet wird, wenn dieser mit dem Datenbus verbunden ist.

Ein weiterer Gegenstand der Erfindung betrifft ein Verfahren zur Steuerung von busvernetzten Teilnehmern durch eine verarbeitende Einheit mit einer Schnittstelle zu einem Datenbus, wie im Anspruch 9 angesprochen. Erfindungsgemäß ist vorgesehen, dass mindestens einer der Teilnehmer durch ein Konfigurationselement ersetzt wird, wobei durch das Konfigurationselement eine Kennung über den Datenbus gesendet wird und wobei das Konfigurationselement anhand der Kennung durch die verarbeitende Einheit erkannt wird und daraufhin als Platzhalter des ersetzten Teilnehmers konfiguriert wird. Gemäß einer bevorzugten Ausführungsform wird das Konfigurationselement derart konfiguriert, dass durch das Konfigurationselement Daten in derselben Länge gesendet werden, wie durch den ersetzten Teilnehmer. Weiterhin bevorzugt werden von der verarbeitenden Einheit erhaltene Daten durch eine anwendungsspezifische Schaltung des Konfigurationselements nicht verarbeitet. Gemäß einer weiteren bevorzugten Ausführungsform ist vorgesehen, dass die Daten von dem mindestens einen Konfigurationselement durch die verarbeitende Einheit nicht verarbeitet werden. Gemäß einer weiteren bevorzugten Ausführungsform ist vorgesehen, dass eine Steuerung und ein Gateway über einen weiteren Bus verbunden werden, um als verarbeitende Einheit zu dienen, wobei die Schnittstelle zu dem Datenbus an dem Gateway gebildet wird. Von dem Konfigurationselement erhaltene Daten werden anhand der Kennung von dem Gateway erkannt, worauf die Steuerung angewiesen wird, diese Daten nicht zu verarbeiten.

Nachfolgend wird die Erfindung anhand von Ausführungsbeispielen in Zeichnungen näher erläutert. Die Ausführungen dienen zur Erläuterung des erfindungsgemäßen Systems mit einem oder mehreren Konfigurationselementen, sowie des erfindungsgemäßen Verfahrens, gleichermaßen. Die Ausführungen sind beispielhaft und schränken den allgemeinen Erfindungsgedanken nicht ein.

Es zeigen
- Figur 1: eine erste Ausführungsform des erfindungsgemäßen Systems zur Steuerung von busvernetzten Teilnehmern in einer schematischen Darstellung;
- Figur 2: eine zweite Ausführungsform des erfindungsgemäßen Systems zur Steuerung von busvernetzten Teilnehmern in einer schematischen Darstellung;
- Figur 3: eine schematische Darstellung von Daten, welche von Teilnehmern und erfindungsgemäßen Konfigurationselementen des Systems gemäß Figur 2 gesendet werden;
- Figur 4: ein Ausführungsbeispiel eines erfindungsgemäßen Konfigurationselements.

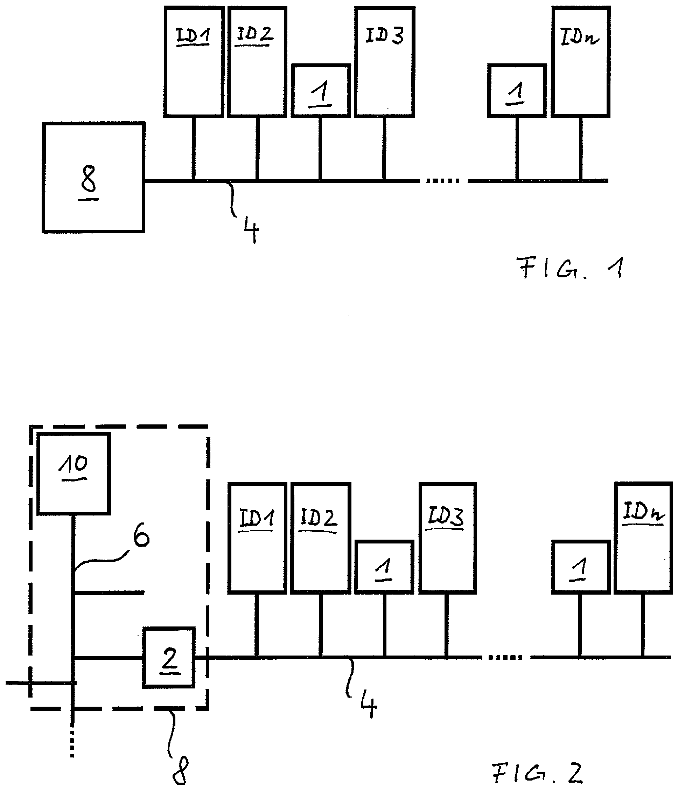

Die Figur 1 zeigt eine schematische Darstellung einer ersten Ausführungsform eines erfindungsgemäßen Systems zur Steuerung von busvernetzten Teilnehmern, die mit den Bezugszeichen ID1, ID2 bis IDn bezeichnet sind, wodurch eine unbestimmte Anzahl von n Teilnehmern dargestellt werden soll. Die Teilnehmer sind über einen Datenbus 4 mit einer verarbeitenden Einheit 8 verbunden. Mindestens einer der Teilnehmer ist durch ein Konfigurationselement 1 ersetzt, welches ebenso mit dem Datenbus 4 verbunden ist. Erfindungsgemäß sendet das Konfigurationselement 1 eine Kennung über den Datenbus 4 und wird anhand seiner Kennung von der verarbeitenden Einheit 8 als Konfigurationselement erkannt und entsprechend als Platzhalter für den ersetzten Teilnehmer konfiguriert. Das Konfigurationselement 1 wird derart konfiguriert, dass es Daten in derselben Länge sendet, wie der Teilnehmer, den das Konfigurationselement 1 ersetzt. Die von dem Konfigurationselement 1 gesendeten Daten dienen dazu, die Gesamtlänge der je Bustakt gesendeten Daten unabhängig von der Anzahl der durch Konfigurationselemente als Platzhalter ersetzten Teilnehmer konstant zu halten. Die vom Konfigurationselement 1 gesendeten Daten werden durch die verarbeitende Einheit nicht verarbeitet. Es ist insofern beliebig, welche Daten durch das Konfigurationselement gesendet werden. Es besteht jedoch die Möglichkeit, dass das Konfigurationselement beispielsweise ausschließlich Nullwerte als Daten sendet.

In der Figur 2 ist eine zweite Ausführungsform des erfindungsgemäßen Systems zur Steuerung von busvernetzten Teilnehmern ID1 bis IDn schematisch dargestellt. Bei der verarbeitenden Einheit 8 kann es sich um eine unmittelbar mit dem Datenbus 4 verbundene Bussteuerung handeln, vgl. Figur 1. In dem Ausführungsbeispiel gemäß Figur 2 besteht die verarbeitende Einheit 8 aus einer Steuerung 10, welche über einen weiteren Bus 6 mit einem Gateway 2 verbunden ist, wobei das Gateway 2 die Schnittstelle zu dem Datenbus 4 aufweist. An dem weiteren Bus 6 können wiederum Teilnehmer angeschlossen sein, die unabhängig von dem erfindungsgemäßen System sind. Ein wesentlicher Unterschied dieser Ausführungsform besteht darin, dass die Steuerung 10 die Konfigurationselemente 1, die mit dem Datenbus 4 verbunden sind, nicht als solche erkennen kann, da die Kennung der Konfigurationselemente 1 lediglich für den Datenbus 4, nicht aber für den weiteren Bus 6 eine unverwechselbare Kennung für ein Konfigurationselement darstellt. Aus diesem Grund ist das Gateway 2 dazu vorgesehen, die Kennung der Konfigurationselemente 1 zu erkennen und daraufhin die Information an die Steuerung 10 zu liefern, welche Teilnehmer durch Konfigurationselemente 1 ersetzt sind, so dass diese entsprechend konfiguriert werden können.

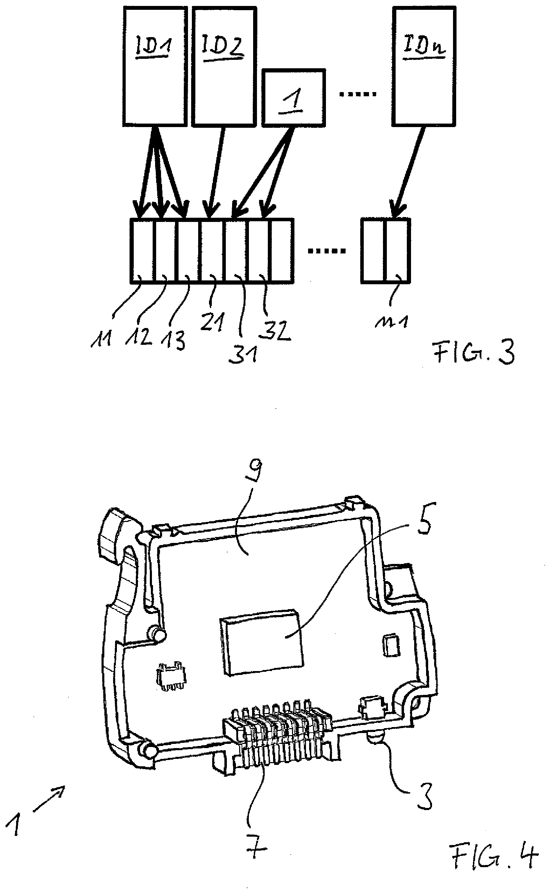

In der Figur 3 sind schematisch die Daten dargestellt, welche je Bustakt von den Teilnehmern ID1 bis IDn geliefert wird, wobei mindestens einer der Teilnehmer durch ein Konfigurationselement ersetzt ist. Der Teilnehmer ID1 sendet beispielsweise je Bustakt drei Datenbytes 11, 12, 13, der Teilnehmer ID2 nur ein Datenbyte 21. Der ersetzte Teilnehmer würde zwei Datenbytes 31, 32 senden, welche stattdessen durch das Konfigurationselement 1, beispielsweise als in Form von zwei Datenbytes 31, 32 mit Nullwerten gesendet werden. Die Gesamtlänge der Daten von dem ersten Byte 11 bis zu dem letzten Byte n1 des n-ten Teilnehmers IDn bleibt dadurch unabhängig von der Anzahl der durch Konfigurationselemente 1 ersetzten Teilnehmer gleich, wodurch die Verarbeitung durch eine einheitliche Steuerung wesentlich vereinfacht wird.

In der Figur 4 ist ein Ausführungsbeispiel für ein erfindungsgemäßes Konfigurationselement 1 dargestellt, welches über eine anwendungsspezifische Schaltung 5 verfügt, welche über einen Anschluss 7 mit dem Datenbus 4 (vgl. Figuren 1 und 2) verbindbar ist. In einem Gehäuse 9 befindet sich ansonsten noch eine Kontrollleuchte 3, welche beispielsweise zur Funktionskontrolle des Konfigurationselements 1 dient.

### Bezugszeichenliste

- 1: Konfigurationselement
- 2: Gateway
- 3: Kontrollleuchte
- 4: Datenbus
- 5: Schaltung
- 6: Weiterer Datenbus
- 7: Anschluss
- 8: Verarbeitende Einheit
- 9: Gehäuse
- 10: Steuerung
- ID1 bis IDn: Teilnehmer
- 11, 12, 13, 21: Datenbytes
- 31, 32, n1: Datenbytes

## Patentansprüche

1. System zur Steuerung von busvernetzten Teilnehmern, wobei das System eine verarbeitende Einheit und mehrere austauschbare busvernetzte Teilnehmer (ID1 ... IDn) aufweist, wobei die verarbeitende Einheit (8) eine Schnittstelle zu einem ersten Datenbus (4) zur Steuerung und/oder Abfrage der Teilnehmer (ID1...IDn) aufweist, wobei einer oder mehrere der Teilnehmer (ID1 ... IDn) jeweils durch ein Konfigurationselement (1) ersetzt sind, so dass jedes Konfigurationselement (1) anstelle des ersetzten Teilnehmers (ID1 ... IDn) mit dem Datenbus (4) vernetzt ist, wobei jedes Konfigurationselement (1) dazu vorgesehen ist, eine unverwechselbare Kennung über den Datenbus (4) zu senden und die verarbeitende Einheit (8) dazu vorgesehen ist, jedes Konfigurationselement (1) anhand seiner unverwechselbaren Kennung zu erkennen, wobei das System **dadurch gekennzeichnet ist, dass** die verarbeitende Einheit dazu vorgesehen ist, jedes Konfigurationselement (1) als Platzhalter für einen ersetzten Teilnehmer (ID1 ... IDn) derart zu konfigurieren, dass das Konfigurationselement (1) Daten in derselben Länge sendet, wie der ersetzte Teilnehmer (ID1 ... IDn), jedes Konfigurationselement (1) dazu vorgesehen ist, von der verarbeitenden Einheit (8) an den ersetzten Teilnehmer (ID1 ... IDn) gesendete Daten zu empfangen, diese jedoch nicht zu verarbeiten.

2. System nach Anspruch 1, **dadurch gekennzeichnet, dass** eine Konfigurationsbeschreibung vorhanden ist, auf die die verarbeitende Einheit (8) zur Erkennung der Konfigurationselemente (1) zugreifen kann und in welcher die unverwechselbaren Kennungen der Konfigurationselemente (1) hinterlegt sind.

3. System nach Anspruch 1 oder 2, **dadurch gekennzeichnet, dass** die verarbeitende Einheit (8) dazu vorgesehen ist, von einem jeweiligen Konfigurationselement (1) erhaltene Daten nicht zu verarbeiten.

4. System nach einem der vorhergehenden Ansprüche, **dadurch gekennzeichnet, dass** die verarbeitende Einheit (8) eine Steuerung (10) und ein Gateway (2) aufweist, wobei das Gateway (2) die Schnittstelle zu dem ersten Datenbus (4) aufweist und über einen zweiten Bus (6) mit der Steuerung (10) verbunden ist und wobei das Gateway (2) dazu vorgesehen ist, die Kennung der Konfigurationselemente (1) zu erkennen und die Steuerung (10) anweist, diese Daten nicht zu verarbeiten.

5. System nach einem der vorhergehenden Ansprüche, **dadurch gekennzeichnet, dass** das Konfigurationselement eine anwendungsspezifische Schaltung (5) und einen Anschluss (7) an den ersten Datenbus (4) aufweist.

6. System nach Anspruch 5, **dadurch gekennzeichnet, dass** die Schaltung (5) dazu vorgesehen ist, dass durch das mit dem ersten Datenbus (4) verbundene Konfigurationselement (1) die Kennung über den ersten Datenbus (4) gesendet wird.

7. System nach einem der Ansprüche 5 oder 6, **dadurch gekennzeichnet, dass** die Schaltung (5) dazu vorgesehen ist, dass durch die verarbeitende Einheit (8) eine Konfiguration dahingehend vorgebbar ist, dass das Konfigurationselement (1) Daten in einer vorgegebenen Länge sendet.

8. System nach Anspruch 7, **dadurch gekennzeichnet, dass** die vorgegebene Länge der Länge derjenigen Daten entspricht, welche durch den ersetzten Teilnehmer (ID1 ... IDn) gesendet wird, wenn dieser mit dem ersten Datenbus (4) verbunden ist.

9. Verfahren zur Steuerung von busvernetzten Teilnehmern durch eine verarbeitende Einheit (8) mit einer Schnittstelle zu einem ersten Datenbus (4), über welchen die Teilnehmer (ID1 ... IDn) gesteuert und/oder abgefragt werden,
wobei einer oder mehrere der Teilnehmer (ID1 ... IDn) jeweils durch ein Konfigurationselement (1) ersetzt werden, so dass jedes Konfigurationselement (1) anstelle des ersetzten Teilnehmers (ID1 ... IDn) mit dem Datenbus (4) vernetzt ist, wobei durch jedes Konfigurationselement (1) eine unverwechselbare Kennung über den ersten Datenbus (4) gesendet wird und wobei jedes Konfigurationselement (1) anhand der unverwechselbaren Kennung durch die verarbeitende Einheit (8) erkannt wird und daraufhin als Platzhalter des ersetzten Teilnehmers derart konfiguriert wird, wobei das Verfahren **dadurch gekennzeichnet ist, dass** durch das Konfigurationselement (1) Daten in derselben Länge gesendet werden, wie durch den ersetzten Teilnehmer (ID1 ... IDn), von der verarbeitenden Einheit (8) erhaltene Daten durch eine anwendungsspezifische Schaltung (5) des jeweiligen Konfigurationselements (1) nicht verarbeitet werden.

10. Verfahren nach Anspruch 9, **dadurch gekennzeichnet, dass** zur Erkennung der Konfigurationselemente (1) die verarbeitende Einheit (8) auf eine Konfigurationsbeschreibung zugreift, in welcher die unverwechselbaren Kennungen der Konfigurationselemente (1) hinterlegt sind.

11. Verfahren nach Anspruch 9 oder 10, **dadurch gekennzeichnet, dass** die Daten von dem mindestens einen Konfigurationselement (1) durch die verarbeitende Einheit (8) nicht verarbeitet werden.

12. Verfahren nach einem der Ansprüche 9 bis 11, **dadurch gekennzeichnet, dass** als verarbeitende Einheit (8) eine Steuerung (10) und ein Gateway (2) über einen weiteren Bus (6) verbunden werden, wobei die Schnittstelle zu dem Datenbus (4) an dem das Gateway (2) gebildet wird, wobei von dem Konfigurationselement (1) erhaltene Daten anhand der Kennung von dem Gateway (2) erkannt werden und die Steuerung angewiesen wird, diese Daten nicht zu verarbeiten.

## Claims

1. System for controlling networked bus participants, wherein the system has a processing unit and several exchangeable networked bus participants (ID1 ... IDn), wherein the processing unit (8) has an interface to a first data bus (4) for controlling and/or querying the participants (ID1... IDn), wherein one or more of the participants (ID1 ... IDn) are respectively replaced by a configuration element (1), such that each configuration element (1) is networked with the data bus (4) instead of the replaced participant (ID1 ... IDn), wherein each configuration element (1) is provided to transmit a unique identifier via the data bus (4) and the processing unit (8) is provided to recognise each configuration element (1) on the basis of its unique identifier, wherein the system is **characterised in that** the processing unit is provided to configure each configuration element (1) as placeholder for a replaced participant (ID1 ... IDn) such that the configuration element (1) transmits data of the same length as the replaced participant (ID1 ... IDn), each configuration element (1) is provided to receive data transmitted from the processing unit (8) to the replaced participant (ID1 ... IDn), but however not to process them.

2. System according to claim 1, **characterised in that** a configuration description is provided which the processing unit (8) can access for the recognition of the configuration elements (1) and in which the unique identifiers of the configuration elements (1) are stored.

3. System according to claim 1 or 2, **characterised in that** the processing unit (8) is provided to not process data received from a respective configuration element (1).

4. System according to any of the preceding claims, **characterised in that** the processing unit (8) has a controller (10) and a gateway (2), wherein the gateway (2) has the interface to the first data bus (4) and is connected to the controller (10) via a second bus (6) and wherein the gateway (2) is provided to recognise the identifier of the configuration elements (1) and instructs the controller (10) not to process this data.

5. System according to any of the preceding claims, **characterised in that** the configuration element has a usage specific circuit (5) and a connection (7) to the first data bus (4).

6. System according to claim 5, **characterised in that** the circuit (5) is provided such that by means of the configuration element (1) connected to the first data bus (4) the identifier is transmitted via the first data bus (4).

7. System according to any of claims 5 or 6, **characterised in that** the circuit (5) is provided such that by means of the processing unit (8) a configuration can be predetermined to the effect that the configuration element (1) transmits data of a predetermined length.

8. System according to claim 7, **characterised in that** the predetermined length corresponds to the length of the data which is transmitted by the replaced participant (ID1 ... IDn) when said participant is connected to the first data bus (4).

9. Method for controlling networked bus participants by means of a processing unit (8) having an interface to a first data bus (4) via which the participants (ID1... IDn) are controlled and/or queried, wherein one or more of the participants (ID1 ... IDn) are replaced respectively by a configuration element (1) such that each configuration element (1) is networked with the data bus (4) instead of the replaced participant (ID1 ... IDn), wherein by each configuration element (1) a unique identifier is transmitted via the first data bus (4) and wherein each configuration element (1) is recognised on the basis of the unique identifier by the processing unit (8) and as a result is such configured as placeholder of the replaced participant, wherein the method is **characterised in that** data is transmitted by the configuration element (1) of the same length as by the replaced participant (ID1 ... IDn), data received from the processing unit (8) is not processed by a usage specific circuit (5) of the respective configuration element (1).

10. Method according to claim 9, **characterised in that** for recognising the configuration elements (1) the processing unit (8) accesses a configuration description in which the unique identifiers of the configuration elements (1) are stored.

11. Method according to claim 9 or 10, **characterised in that** the data from the at least one configuration element (1) is not processed by the processing unit (8).

12. Method according to any of claims 9 to 11, **characterised in that** as processing unit (8) a controller (10) and a gateway (2) are connected via a further bus (6), wherein the interface to the data bus (4) is formed at the gateway (2), wherein data received from the configuration element (1) is recognised by the gateway (2) on the basis of the identifier and the controller is instructed not to process this data.

## Revendications

1. Système de commande d'abonnés connectés en réseau par bus, dans lequel le système présente une unité de traitement et plusieurs abonnés connectés en réseau par bus (ID1 ... IDn) permutables, dans lequel l'unité de traitement (8) présente une interface avec un premier bus de données (4) afin de commander et/ou interroger les abonnés (ID1 ... IDn), dans lequel un ou plusieurs des abonnés (ID1... IDn) sont respectivement remplacés par un élément de configuration (1) de sorte que chaque élément de configuration (1) est connecté en réseau avec le bus de données (4) à la place de l'abonné (ID1 ... IDn) remplacé, dans lequel chaque élément de configuration (1) est prévu pour envoyer un identifiant non interchangeable par l'intermédiaire du bus de données (4) et l'unité de traitement (8) est prévue pour reconnaître chaque élément de configuration (1) à l'aide de son identifiant non interchangeable, dans lequel le système est **caractérisé en ce que** l'unité de traitement est prévue pour configurer chaque élément de configuration (1) en tant que substitut d'un abonné (ID1 ... IDn) remplacé de telle manière que l'élément de configuration (1) envoie des données de même longueur que dans le cas de l'abonné (ID1 ... IDn) remplacé,
chaque élément de configuration (1) est prévu pour recevoir de l'unité de traitement (8) des données envoyées à l'abonné (ID1 ... IDn) remplacé, mais non pour traiter celles-ci.

2. Système selon la revendication 1, **caractérisé par** la présence d'une description de configuration à laquelle l'unité de traitement (8) peut accéder pour reconnaître les éléments de configuration (1) et au sein de laquelle sont stockés les identifiants non interchangeables des éléments de configuration (1).

3. Système selon la revendication 1 ou 2, **caractérisé en ce que** l'unité de traitement (8) est prévue pour ne pas traiter des données reçues d'un élément de configuration (1) respectif.

4. Système selon l'une quelconque des revendications précédentes, **caractérisé en ce que** l'unité de traitement (8) présente une commande (10) et une passerelle (2), dans lequel la passerelle (2) présente l'interface par rapport au premier bus de données (4) et est relié à la commande (10) par l'intermédiaire d'un second bus (6) et dans lequel la passerelle (2) est prévue pour reconnaître l'identifiant des éléments de configuration (1) et informe la commande (10) de ne pas traiter lesdites données.

5. Système selon l'une quelconque des revendications précédentes, **caractérisé en ce que** l'élément de configuration présente un circuit (5) spécifique à l'application et une connexion (7) au premier bus de données (4).

6. Système selon la revendication 5, **caractérisé en ce que** le circuit (5) est prévu pour que l'identifiant soit envoyé par l'intermédiaire du premier bus de données (4) par l'élément de configuration (1) relié au premier bus de données (4).

7. Système selon la revendication 5 ou 6, **caractérisé en ce que** le circuit (5) est prévu pour qu'une configuration puisse être prédéfinie grâce à l'unité de traitement (8) de sorte que l'élément de configuration (1) envoie des données d'une longueur prédéfinie.

8. Système selon la revendication 7, **caractérisé en ce que** la longueur prédéfinie correspond à la longueur des données qui est envoyée par l'abonné (ID1 ... IDn) remplacé lorsque celui-ci est relié au premier bus de données (4).

9. Procédé de commande d'abonnés connectés en réseau par bus par le biais d'une unité de traitement (8) avec une interface avec un premier bus de données (4) par l'intermédiaire duquel les abonnés (ID1... IDn) sont commandés et/ou interrogés,
dans lequel un ou plusieurs des abonnés (ID1 ... IDn) sont respectivement remplacés par un élément de configuration (1) de sorte que chaque élément de configuration (1) est connecté en réseau avec le bus de données (4) à la place de l'abonné (ID1... IDn) remplacé,
dans lequel un identifiant non interchangeable est envoyé par l'intermédiaire du premier bus de données (4) par chaque élément de configuration (1) et dans lequel chaque élément de configuration (1) est reconnu par l'unité de traitement (8) à l'aide de l'identifiant non interchangeable et est ensuite configuré en tant que substitut de l'abonné remplacé, dans lequel le procédé est **caractérisé en ce que** des données de même longueur que dans le cas de l'abonné remplacé (ID1 ... IDn) sont envoyées par l'élément de configuration (1),
des données reçues de l'unité de traitement (8) ne sont pas traitées par un circuit (5) spécifique à l'application de l'élément de configuration (1) respectif.

10. Procédé selon la revendication 9, **caractérisé en ce que**, pour reconnaître les éléments de configuration (1), l'unité de traitement (8) accède à une description de configuration au sein de laquelle sont stockés les identifiants non interchangeables des éléments de configuration (1).

11. Procédé selon la revendication 9 ou 10, **caractérisé en ce que** les données du au moins un élément de configuration (1) ne sont pas traitées par l'unité de traitement (8).

12. Procédé selon l'une quelconque des revendications 9 à 11, **caractérisé en ce qu'**une commande (10) et une passerelle (2) sont reliées en tant qu'unité de traitement (8) par l'intermédiaire d'un autre bus (6), dans lequel l'interface par rapport au bus de données (4) est formée au niveau de la passerelle (2), dans lequel des données reçues de l'élément de configuration (1) sont reconnues par la passerelle (2) à l'aide de l'identifiant et la commande est informée de ne pas traiter ces données.
